# EUROPEAN PATENT APPLICATION

(11) **EP 4 625 941 A1**
(43) Date of publication of application: **01.10.2025**
(21) Application number: 24305454.1
(22) Date of filing: 26.03.2024
(51) Int. Cl.: H04L 65/1059, G06T 15/00, G06T 19/00, H04L 67/2869, G06V 20/20, H04L 67/12

(54) **PROCESSING MANAGEMENT OF REAL ENVIRONMENT DATA IN EXTENDED REALITY APPLICATIONS**

(71) Applicant: InterDigital CE Patent Holdings, SAS, 75017 Paris (FR)
(72) Inventor: JOUET, Pierrick, 35000 RENNES (FR); HIRTZLIN, Patrice, 35830 BETTON (FR); LELIEVRE, Sylvain, 35760 MONTGERMONT (FR); FAIVRE D'ARCIER, Etienne, 35750 SAINT GONLAY (FR); FONTAINE, Loic, 35530 NOYAL SUR VILAINE (FR); ONNO, Stephane, 35760 SAINT GREGOIRE (FR)
(74) Representative: Interdigital

(57) **Abstract**

A mechanism is proposed to handle scanned data (3D Model) information from the user's real environment for extended or augmented reality applications. The mechanism relies on a configuration step. Then, the transmission of scanned data or raw data over a network from a user equipment to a server is detailed. The architecture for the user equipment may be a lightweight extended Reality (XR) UE requiring the delegation of the extraction of 3D Model of the real scene and the segmentation of this model to the server, an advanced user equipment capable of extracting 3D Model but requiring the delegation of the segmentation task to a server or a high-end user equipment capable of performing locally the extraction of the 3D model for standalone usage.

## Description

### 1. Technical Field

The present principles generally relate to the domain of managing scanned data representative of the real environment of an extended reality scene. The transmission of scanned data or raw data over a network from a User Equipment (UE) to a server is detailed. In particular, the present principles relate to UE configuration and architectures.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

In the domain of extended Reality (XR) application, the knowledge of the real world may be required for different purposes. For example, the localization of the XR rendering device or for a seamless insertion of virtual content into the user's real environment. Such knowledge about the real world can include the location of trackables items to correctly place virtual content according to the user(s), and to the 3D representation of the surrounding environment (point cloud, mesh, semantics) to ensure proper interactions between virtual and real content (occlusion, collision, physics). This knowledge of the real word (also called scene understanding) may be acquired in real time by an XR User equipment (UE), for example through an XR runtime module that collects user environment data through sensors and process them to build a real-world representation (e.g. a 3D scene graph). Typical UE (e.g., XR UE) may be Head Mounted Displays (HMD), optical see-through glasses and video see-through HMDs for Augmented Reality (AR) and Mixed Reality (MR), mobile devices with positional tracking and camera, wearables etc. In addition, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

Depending on the device capabilities, the application may need to delegate the computation of scan data to a server. Scan data have then to be transmitted between the UE and the server in the uplink (UL) or between the server and the UE in the downlink (DL). In the case of shared experiences (multiple users for example), sharing a model can be useful, its require a transmission in the UL. Standalone modes are proposed but there is a lack of a mechanism to configure, capture, format and transmit scanned data in network.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

A mechanism is proposed to handle scanned data (3D Model) information from the user's real environment for extended or augmented reality applications. The mechanism relies on a configuration step. Then, the transmission of scanned data or raw data over a network from a user equipment to a server is detailed. The architecture for the user equipment may be a lightweight extended Reality (XR) UE requiring the delegation of the extraction of 3D Model of the real scene and the segmentation of this model to the server, an advanced user equipment capable of extracting 3D Model but requiring the delegation of the segmentation task to a server or a high-end user equipment capable of performing locally the extraction of the 3D model for standalone usage.

The present principles relate to a method for managing scanned data of an extended or augmented scene. The method comprises initializing a user equipment configured to acquire data relative to a real environment of the extended or augmented scene. A configuration for the user equipment is determined to define the transmitting modes of scanned data to a server. The user equipment scans the real environment and transmit the scanned data to the server according to this configuration. In an embodiment, the user equipment may delegate a building of a 3D model to the server. In this case, the server may send the 3D model back to the user equipment which segment it. In a variant, the user equipment also delegates the segmentation of the 3D model to the server. The initialization of the user equipment may be performed after exchanges with the server.

The present principles also relate to a device comprising a processor configured to implement the above method. The device may be the user equipment itself.

### 4. Brief Description of Drawings

The present disclosure will be better understood, and other specific features and advantages will emerge upon reading the following description, the description making reference to the annexed drawings wherein:
- **Figure 1** illustrates a generic module to manage a representation of the real part of an XR scene;
- **Figure 2** depicts an instantiation of the generic module of Figure 1 as a scene understanding module that maintains a representation of the user environment;
- **Figure 3** shows an example architecture of a device 30 which may be configured to implement methods according to embodiments of the present principles;
- **Figure 4** illustrates the main steps of a method to configure, capture, format and transmit scanned data in a network according to the present principles;
- **Figure 5** illustrates the configuration process performed at step 42 of Figure 4;
- **Figures 6** **and** **7** illustrates two embodiments of runtime step 43 of Figure 4, according to the present principles.

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

In extended reality (XR) or augmented reality (AR) applications, having a good knowledge of the real environment condition is particularly important where virtual objects should be seamlessly integrated in the real world. 3D Model of real environment is used to check collision, check occlusion, correctly position shadows and correctly position virtual object. Several parameters can be associated with an output of a scan, like meshes, textures, point clouds, or gaussian splatting. The geometry (e.g. mesh) is mandatory to check collision, occlusion, and to position shadows and virtual objects. The texture may be used to compute relighting of real scene. When a scan of a scene is performed, an output may be a point cloud. Each point is associated with a color. From this point cloud, it's possible to generate a mesh. When depth data are available, it is possible to combine them with images to generate a textured mesh. Mesh and texture can be used can be used independently. The 3D model of a real scene corresponds to the point clouds, meshes or textured meshes for example. Labeling and segmentation are performed in a next step. The input is a textured mesh. In this case, the term Segmented 3D Model is used. The 3D Model can be segmented and labeled. When segmented, each element/object of the 3D Model can be accessed individually. Labeling allows semantic access. For example, all the chairs in the scene can be selected. Segmentation and labelling require significant processing capacity. This is the case when using Artificial intelligence (AI) technologies that have enabled significant advances in the field of segmentation. Therefore, a lightweight UE often needs to delegate this processing to an external entity with more capabilities (e.g. a remote edge server). 3D Model of a real scene can be extracted from images of the environment, captured by a RGB camera from different points of view (Structure from motion). When available, a depth camera or a lidar sensor can be used to build a depth map of the scene. The first level of reconstruction is generally the point cloud. The mesh is generated afterwards.

Scene understanding is the knowledge of the real environment. A 3D Model of the real scene is provided. Segmentation and labeling allow to manage a fine and precise interaction between elements of the real environment and virtual elements of the XR or AR scene. In XR applications, a scene description is used to combine explicit and easy-to-parse description of a scene structure and some binary representations of media content. Typical scene description languages like glTF allow the description of XR scene. Scene description can be used to transmit 3D model of the real environment. The pose of the 3D Model is relative to a XR Space. This XR Space may be related to a trackable space. It relies on anchors, trackables and XR Space. An anchor is a virtual element for which its position, orientation, scale and other properties are expressed in the trackable space defined by a trackable. A virtual asset's position, orientation, scale and other properties are expressed in relation to an anchor. A trackable is a real-world object that can be tracked by the XR runtime. Each trackable provides a local reference space, also called a trackable space, in which an anchor can be expressed. The XR Space is a frame of reference in which 3D coordinates are expressed.

Proprietary and standardized solutions exist to extract scan data. For example, Khronos OpenXR provides a cross-platform access directly into diverse XR device runtimes across multiple platforms. OpenXR enables applications and engines to run on any system that exposes the OpenXR API. Several extensions of OpenXR address real scene capture (MSFT, FB). OpenXR API specified some extensions relative to scene understanding which would allow to start the scan if the feature is supported by the XR UE; to get a first level of the 3DModel (without segmentation) related to an XRSpace if the feature is supported by the XR UE; to request 3DModel or element of the 3D Model to the server; and to set a refresh frequency.

According to the present principles, solutions are possible for the definition of a module dedicated to the scene understanding of the XR device environment, with a new generic API to invoke this module. Semantic is proposed to specify, in a scene description file, how the real/virtual integration should be made.

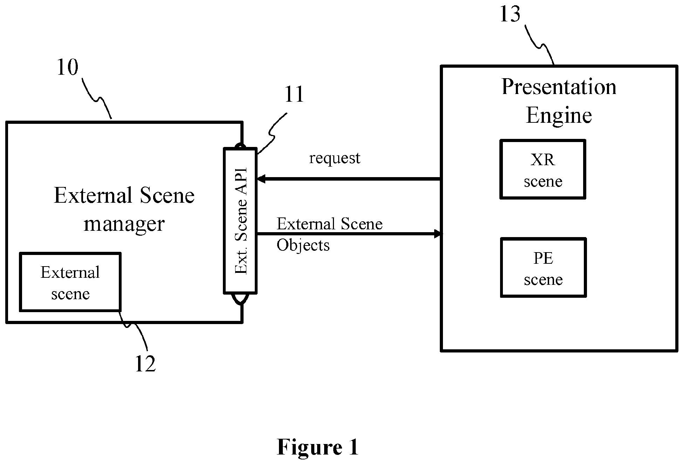

**Figure 1** illustrates a generic module 10 to manage a representation of the real part of an XR scene. This module and associated API 11 handle an external scene graph 12 that is synchronized with the virtual scene managed by a presentation engine 13. Semantics is provided to include information related to scene understanding in a virtual scene description file and to describe the representation of a real scene. Generic API 11 exposes to presentation engine 13 a set of functions that comprises initializing and configuring the external scene manager module (that is creation of a session between the two modules, setting of parameters needed by the external module to handle its scene); starting or stopping the external module processing; notifying the external module that an update occurred in the scene managed by the presentation engine; and registering callbacks for the external module to request status from the PE module or to notify that updates occurred in the external scene.

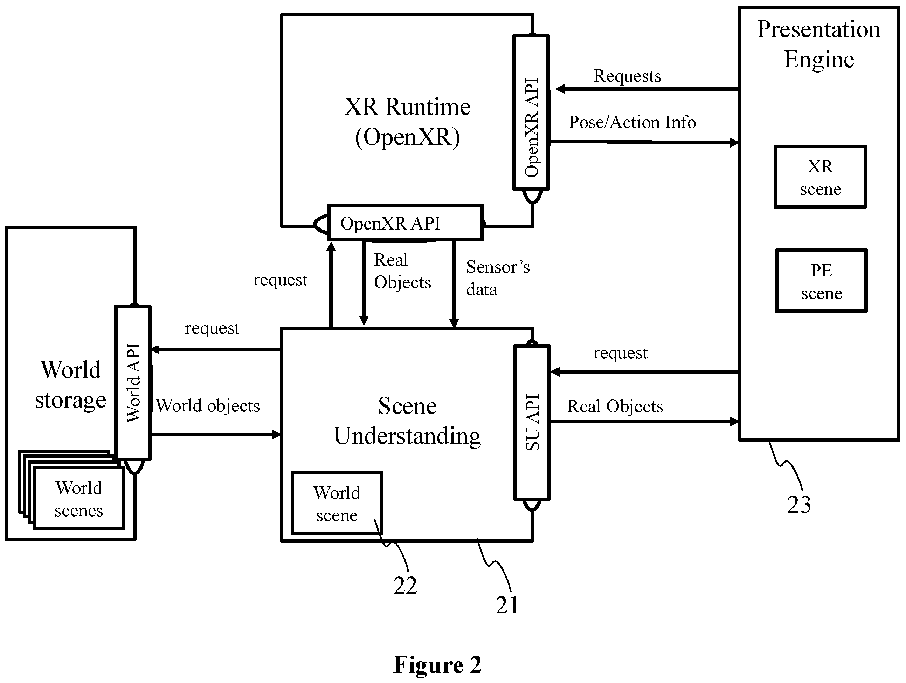

**Figure 2** depicts an instantiation 21 of generic module 10 of Figure 1 as a scene understanding module that maintains a representation 22 of the user environment. In this example embodiment, this module is the unique entry point for a presentation engine module 23 to get the knowledge of the real scene around the user and to integrate a virtual scene into this real scene. Scene understanding (SU) module 21 creates and maintains a representation 22 of the real environment (for example, scene graph of the real-world scene) around the user. It gets updates of this scene graph by scanning in real-time the user environment (using the XR Runtime API) or by retrieving pre-scanned data from a world storage module. Presentation engine (PE) 23 may control the configuration and the starting of scene graph 22 creation and update. A generic API is proposed herein that provides methods for the PE. The scan of the user environment is linked to anchors and/or trackables that allow a link between a virtual scene and a place in the real environment where to integrate the virtual scene or elements of the virtual scene. Those anchors and trackables may be described in a virtual scene description file (e.g. glTF MPEG_anchor extension). The PE can request the detection and the tracking of the trackables to the XR Runtime module. The detection and the tracking of a trackable results to the definition of an XR space in which the poses of one or more anchors are expressed. Another XR space is defined for each anchor, where the pose of virtual elements can be expressed. Both PE and SU modules may have access to the list of existing XR spaces and use them to spatially synchronize their scene graph. The Id of a trackable XR space (xrSpaceId) is given as input to the API methods to handle a scan of real objects around each trackable. Each xrSpaceId gives a mapping between a trackable described in the XR scene and a set of elements of the world scene. Each object of the world scene, returned by the SU module, comprises a set of attributes including a referenceId to identify it in the world scene as a unique object and a xrSpaceId to identify the XR space in which it is located. It may also comprise visual attributes like pose, mesh, material and texture description, lighting attributes for an object representing a real light source, physical attributes to handle interaction with other real or virtual objects (occlusion, collision...). Additional parameters may include semantics information to specify the nature of the object (e.g. "wall", "table", "chair", "light", "sound", ...).

The following table provides a possible API according to the present principles:

| **Method** | **Description** | |
|---|---|---|
| init () | Initialization of the SU module and creation of a session between the PE and the SU module. | |
| configure () | Configures the way the real scene must be scanned. For each trackable XR space, a set of input parameters is given: | |
| | [ | |
| | { | |
| | xrSpaceId | |
| | scanOccurence | |
| | array of object semantics | |
| | array of compute options (scan details, mesh types...) | |
| | array of scan volumes (sphere, box...): determine the volumes where scanned objects must be provided. Real scan objects that intersect one or more of the bounding volumes should be used, and all other objects ignored. | |
| | } | |
| | ] | |
| | Scan volumes may overlap between 2 xrSpaceId. In that case, real object contained in the overlap section may be provided twice, with two different referenceId, or only once for one of the xrSpaceId. | |
| start () | Starts or stops the creation and update of the real scenes. The input parameter is a set of xrSpaceId to specify the trackables around which the scan of real objects must be performed. | |
| stop () | | |
| | [ | |
| | { | |
| | xrSpaceId | |
| | } | |
| | ] | |
| registerCallbacks () | Provides callback functions to the scene understanding module to allow it to send updates or status of the world scene. An array of callbacks is given as input. | |
| | [ | |
| | { | |
| | type (goal of the callback, e.g. an enumeration with the following possible values: UPDATES, STATUS...), | |
| | callback () (a pointer to a function) | |
| | } | |
| | ] | |
| | The parameters of an UPDATES callback are an array of objects that include: | |
| | | • An operation, ADD, UPDATE or REMOVE |
| | | • A timestamp value |
| | | • For ADD, the referenceId and xrSpaceId of the new object as well as a dictionary of attributes and their initialization values. |
| | | • For UPDATE, the referenceId and xrSpaceId of the object as well as a dictionary of attributes and their new values. |
| | | • For REMOVE, the referenceId of the object to remove. |
| | The SU module may automatically call this UPDATE callback at the same occurrence of the scan process or it may call it when significative changes has occurred. | |
| | The parameters of a STATUS callback are an array of objects that include: | |
| | | • xrSpaceId |
| | | • ReferenceId (if absent, all the scene related to xrSpaceId is considered) |
| | | • status (the status of the object referenced by ReferenceId, e.g. ONGOING, COMPLETE, NOT VALID, PARTIAL...) |
| | The SU module may send this STATUS callback multiple time after a scan process has been started, each time this status changes. | |
| getSceneComponents () | Requests element(s) of the world scene. The following set of optional input parameters give filtering criteria for this request: | |
| | { | |
| | ***time*:** requests the world scene at a given historical time or predicted time. This parameter may be used with an XR device able to store past versions of the world scene or able to predict it in the future. A time limit in both directions may be specified, depending on the capacity of | |
| | the XR UE (e.g. a few second in the past and a few tens of ms in the future). | |
| | xrSpaceId: request elements related to a given XR space. | |
| | | |
| | Array of **scan volumes:** request elements contained in one of the specified volumes. | |
| | Array of ***object semantics*:** request elements with one of the given semantics. | |
| | Array of object ***referenceIds*:** request elements with one of the given ids. | |
| | } | |
| | Returns a status of the world scene (same possible values as in the STATUS callback) and if OK (status = COMPLETE), returns the graph of the world scene or of some word scene elements, each returned element comes with a set of attributes: | |
| | | • referenceId |
| | | • visual, lighting, and physical attributes |
| | | • semantic attributes |

In the configure () method, the scanOccurence parameter is a value specifying when the scan of real objects must be updated after a first call to the start () function. In a variant, the scan process may start automatically after a call to the configure () method. An extra "autostart" parameters may be added to this method to explicitly specify this automatic starting mode. the scanOccurence parameter may have different values: ONCE: the scan is performed only once, for instance in case of a static real scene; N_FRAME: the scan is performed periodically, every N rendering frames, N depending on the dynamism of the real scene; AUTO: the scan occurrence is managed by the SU module. The SU module may perform a light pre-analysis to detect significant moves in the real world and start a new scan from the beginning. This pre-analysis may be performed from raw images data, like RGB images from a camera or depth images from a depth sensor. Several of these possible values may be combined to address different scenarios (e.g. ONCE AND AUTO). An object semantics may be any label representing a type of object: "wall", "floor", "table", "chair", "light", "sound", "freespace" ... Compute options and scan volumes may be similar to the one specified in the Microsoft OpenXR scene understanding extension, for example.

According to the present principles, semantics are defined in a scene description file. This semantic specifies if and how the user real environment should be integrated into the scene. Semantics already exist in scene description language, e.g. MPEG-SD MPEG_anchor extension that specify an element of the real world where virtual elements should be positioned. The semantics proposed herein may be added as new parameters in *MPEG anchor* extension, or a new *MPEG node real* (or any other name) extension may be specified, beside the *MPEG anchor* extension. These extensions are related to the glTF format, but we may add these semantics in extensions of any other description format (USD, FBX...). In the following tables, the value in the column **Usage** indicates if the parameter is optional (O) or mandatory (M) according to the present principles.

| **Parameter name** | **Type** | **Usage** | **Description** |
|---|---|---|---|
| useReal | Boolean | O | If true, the scan of the real word is needed for the integration of the virtual objects: |
| | | | • As simplified meshes to be used for physics simulation (collision, occlusion...) |
| | | | • As full mesh/texture to handle relighting or for a digital twin of an object that is not present in the real scene. |
| If (useReal) | | | |
| scanOptions | Array | O | Array of options (enumeration) for the scan computation: possible values can be the one specified in the Microsoft OpenXR scene understanding extension. |
| scanDetails | Object | | Specifies the required level of detail for the mesh (number/type of primitives/m3) and for the texture of the visual mesh. |
| scanOccurence | Enum | | Specifies when the scan of real objects must be updated. It may have the same format as the scanOccurence parameter. |
| scanVolumes | Array | O | Array of bounding volumes that determine the spaces where scanned objects must be used. Real scan objects that intersect one or more of the bounding volumes should be used, and all other objects ignored. |
| realSemantic | Array | O | Semantic descriptions of nodes that are needed ("table", "room", "chair", "wall", "light", "freespace" ...) |

Possible values for a scanOptions item may be:

| **Enumeration value** | **Description** |
|---|---|
| PLANE | Request plane data for scanned objects |
| PLANAR_MESH | Request planar meshes for scanned objects |
| VISUAL_MESH | Request 3D visualization meshes for scanned objects |
| COLLIDER_MESH | Request 3D collider meshes for scanned objects |
| FREE_VOLUME | Request to get the available space around a trackable |
| POINT_CLOUD | Request a points cloud representation |
| BOUNDING_BOX | Request a simplified collider mesh |
| TEXTURED_MESH | Request mesh with a texture |

Semantics of a scanDetail object may be:

| **Parameter name** | **Type** | **Usage** | **Description** | |
|---|---|---|---|---|
| primitivesNumber | number | O | Gives the quantity of geometric primitives per m3 | |
| primitiveType | Enum | O | Gives the types of primitives | |
| TextureOptions | Array | O | Array of options (e.g. enumeration) for the texturing details. Possible values may be: | |
| | | | | • LOW_RES, HIGH_RES for the resolution of the texture, or the exact resolution (e.g. 1024x768) |
| | | | | • LOW_LIGHT, HIGH_LIGHT for the level of lightning of the texture |
| | | | | • RGB, RGBA...for the texture format. |

Possible values for a primitiveType may be:

| **Enumeration value** | **Description** |
|---|---|
| QUAD | Mesh of 3D Model is represented by an array of Quad |
| TRIANGLE | Mesh of 3D Model is represented by an array of TRIANGLE |
| POINT CLOUD | 3D Model is represented by a point cloud |
| GAUSSIAN_SPLAT | 3D Model is represented by an array of gaussian |

The scanOccurence parameter is a value specifying when the scan of real objects must be updated. It may have the same format as the one in the configure () method of the API. Semantics for a scan Volumes object may be defined as follows. 3D coordinates are expressed in the XR space related to trackable associated to the anchor.

| **Parameter name** | | **Type** | **Usage** | **Description** |
|---|---|---|---|---|
| Type | | Enum | M | SPHERE, BOX, FRUSTUM |
| If (type == SPHERE) | | | | |
| | Center | array | M | 3D coordinate of the center of the sphere |
| | Radius | number | M | Radius of the sphere in meters. |
| If (type == BOX) | | | | |
| | Pose | matrix | M | 4*4 matrix representing the center position and orientation of the box |
| | Extents | array | O | Edge-to-edge length of the box along each dimension. |
| If (type == FRUSTUM) | | | | |
| | Pose | matrix | M | 4*4 matrix representing the position and orientation of the tip of the frustum |
| | Fov | Vec4 | M | Angles of the four sides of the frustum |
| | Far | number | M | Positive distance of the far plane or the frustum |
| | near | number | M | Positive distance of the near plane or the frustum |

A scene description format is proposed for the scan of the real scene provided by the "scene understanding" module. This format is related to the real-world objects returned by the getSceneComponents () method and the UPDATE callbacks of the API. It may be the description of the full space around the user, or it can be an update, with only the differences from a previous provision. The format defined hereafter is an example based on the Khronos glTF language, extended with MPEG-SD extensions, but similar features can be adapated to other languages, for instance the one used for the internal representation of the scene (PE scene). The scan of one or more real objects may come as a scene graph, for example glTF scene graph. Each root node of this graph is associated/mapped with a virtual node of the glTF scene of the PE module that features an MPEG_anchor extension, i.e. the one who shares the same XR space. The transform matrix of a "real" node should be expressed in the trackable XR space (xrSpaceId). A "real" node may have a mesh and a texture generated and provided by the SU module. Extra parameters may be added to a "real" node inside a new MPEG_node_real extension (or any other name).

| **Parameter name** | **Type** | **Usage** | **Description** |
|---|---|---|---|
| referenceId | String | | Unique id of a real node, set by the SU module |
| xrSpaceId | String | O | XR space in which transform information are expressed. Only needed for a root node of the scene graph. |
| realSemantic | String | O | Semantic description of the node ("table", "room", "chair" ...) |
| scan Type | enum | M | Indicates the kind of mesh associated to the node: |
| | | | • FULL: a complete mesh, material and texture is provided |
| | | | • BOUNDING: a simplified mesh is provided that can be used for physics simulation (collision, occlusion...). |

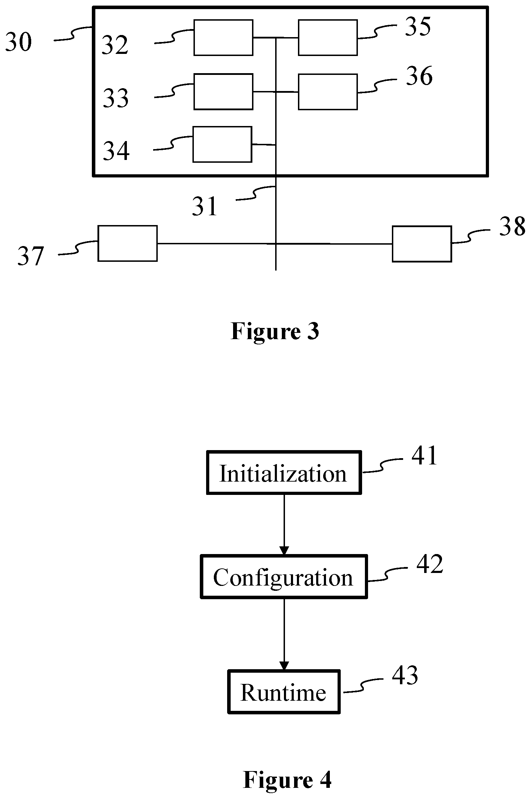

**Figure 4** illustrates the main steps of a method to configure, capture, format and transmit scanned data in a network according to the present principles.

The method starts with an initialization step 41 of the session with the exposition of the UE capabilities. The UE establishes an XR session locally, based on the device capabilities or on request from server.

In a first embodiment, the UE sends a message giving the scanned requirement for the virtual scene to the server and the UE exposes its capabilities. UE set the mode scan required. This initialization step can be done during an uplink delivery session. In another embodiment, the server sends a message giving requirements for the scan of the real scene and the UE replies by exposing its capabilities. This initialization step can be done during a downlink delivery session. The initialization message exchange comprises at least the information that the process of scanning the real scene must be launched. In a second step, a segmentation process can be initiated. For shared AR experience, a parameter indicates that 3D Model are transmitted to the server (Shared Data), this parameter can be optional. The transmission of shared data assumes that the extraction is locally performed.

Parameters are ScanRequired: if true, the real environment must be scanned, a 3D Model will be built (request from server or from UE); SegmentationRequired: if true, the 3D Model must be segmented (request from server or from UE); SharedDatas: if true, the 3D Model data or the segmented 3D Model must be transmitted to the other UEs that share the same XR experience.

| **Name** | **Type** | **Cardinality** | **Description** |
|---|---|---|---|
| ScanRequired | Bool | 1..1 | Scan must be processed |
| If(ScanRequired){ | | | |
| ScanParametersArray | Array | 1..1 | |
| scanParameters | Object | 0..n | Parameters defined for the configure() function in relation to Figure 2. |
| SegmentationRequired | Bool | 0..1 | Segmentation must be processed |
| If (SegmentationRequired){ | | | |
| SegmentationParameters | Array | 0..1 | Array of object semantics as {"table", "room", "chair", "character", ...} |
| } | | | |
| SharedDatas | bool | 0..1 | If scan extraction and/or segmentation is made locally (the UE has the required capabilities), a true value indicates that the 3DModel must be transmitted to the server |
| } | | | |

Capabilities message is the response of the UE to the initialization message from server. It's an Up link (UL) message. The parameters are Local Scanning: if true, UE can extract scan data; and Local Segmentation: if true, UE can segment the 3D model.

| **Name** | **Type** | **Cardinality** | **Description** |
|---|---|---|---|
| LocalScanning | bool | 1..1 | If true, scan data scanning will be made by UE. |
| If(Local Scanning) { | | | |
| ScanParametersArray | Array | 1..1 | |
| scanParameters | Object | 0..n | Parameters defined for the configure() function in relation to Figure 2. |
| Local Segmentation | bool | 0..1 | If true, scan will be segmented by UE. |
| If(LocalSegmentation){ | | | |
| SegmentationParameters | Array | 1..1 | Array of object semantics as {"table", "room", "chair", "character", ...} |
| } | | | |
| } | | | |

The session initialization information may, for example, be formatted in JSON format.

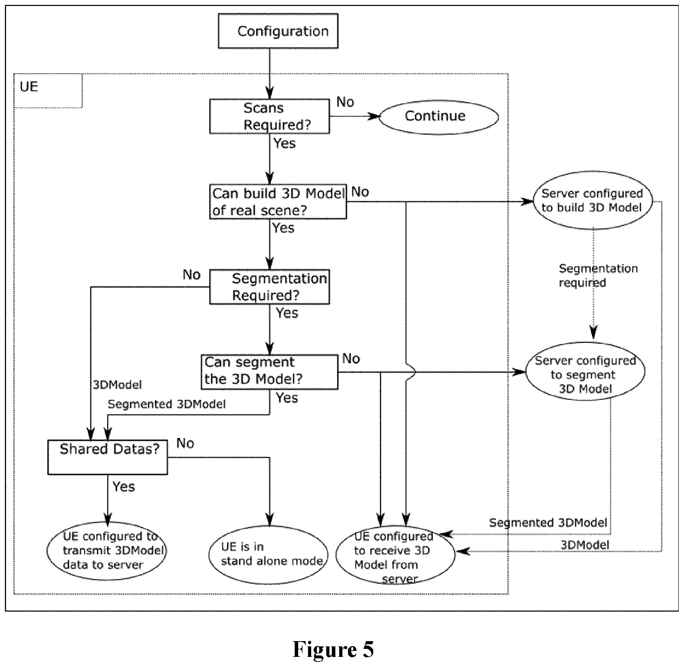

**Figure 5** illustrates the configuration process performed at step 42 of Figure 4. According to the present principles, during configuration process, messages are exchanged between the UE and the server to configure the transmission of scan data. Exchanged information may be related to the type of data to be transmitted, the segmentation process, the specific request of scanned object, the frequency at which light must be evaluated, and the XR Space. Depending on its capabilities and initialization session, the UE extracts scan data and transmit 3D Model to the server. In one embodiment, the server initiates the configuration and sends a configuration message (for example: when scanning and segmentation are done on server side). In another embodiment, the UE initiates the configuration and sends a configuration message. Depending on this, configuration data exchanges are adapted. When the server receives the 3D model, if the segmentation operation has been requested, the server has this information to carry out the segmentation operation.

Parameters are scanOccurrence; XRSpace; Data: depending on capabilities of the UE, type of Data will change. Three different types of data are transmitted: Raw data: pose, images and (optional) depth map are transmitted to build a 3D Model; 3D Model: a 3D Model is transmitted for segmentation and labeling; and Segmented 3D Model: segmented and labelled 3D Model is transmitted for shared application. In one embodiment, one configuration message is considered per XRSpace. In another embodiment, configuration messages are grouped in one array (if there is more than one trackable/XRSpace in the scene).

Configurations parameters are negotiated between the UE and server. This includes defining common XR spaces and defining data that are transmitted to the server for 3DModel building. The format is extensible to support the exchange of additional/future configuration information. The configuration is performed during XRSpatial downlink and uplink delivery session. The configuration format describes the data format. The session configuration information may be, for example, formatted in JSON format.

| **Name** | **Type** | **Cardinality** | **Description** |
|---|---|---|---|
| scanOccurrence | Enum | 1..1 | |
| xrSpace | ID | 1..1 | ID of the XRSpace used to express the 3D coordinates of the pose. |
| RawDatas | Array | 1..1 | Array of datas used by the server to extract scan data. |
| RawData | Object | O..n | |
| Depth Datas | Array of 3D points (or mesh) | 0..1 | The depth data (from lidar for example) |

RawData are defined according to the following syntax:

| **Nam** | **Type** | **Cardinality** | **Description** |
|---|---|---|---|
| texture | Image | 1..1 | Image used for extraction (can be done from one image or from a set of images) |
| View pose | Array (16 floats) | 1..1 | view poses used for extraction. It's the pose of the camera relative to an xrSpace. |
| Size | Vec2 | 1..1 | Size of the texture |
| timestamp | time information | 1..1 | timestamp (associated to image capture). Time information can be a string (date:time AAAA:MM:JJ:HH:MN:SS:MS) or a number |
| Depth | Texture | 0..1 | The depth map (gray level) |

In one embodiment pose can be extracted from a set of images. In another embodiment, a depth map texture can be transmitted in RawData object. This depth map corresponds to depth data associated with view pose. In this case, parameter "Depth" is not transmitted. Intrinsics parameters (camera) are known by the server (other part of initialization). The refresh occurrence can be received during configuration process or set by UE (if the UE can extract 3D Model). In one embodiment, the refresh occurrence can be logically combined. In another embodiment, data are transmitted only when value change.

Configurations parameters are negotiated between the UE and server. This includes defining common XR spaces and defining data that are transmitted to the server for 3Dmodel segmentation. The format is extensible to support the exchange of additional/future configuration information. The configuration is performed during XRSpatial downlink and uplink delivery session. A completed or a partial 3DModel can be transmitted for segmentation process. When segmentation is not required, UE can receive 3DModel.

| **Name** | **Type** | **Cardinality** | **Description** |
|---|---|---|---|
| RefreshOccurrence | enum | 1..1 | |
| xrSpace | ID | 1..1 | ID of the XRSpace used to express the 3D Model |
| 3DModel | Object | 1..1 | |

3DModel is defined according to the following syntax:

| **Name** | **Type** | **Cardinality** | **Description** |
|---|---|---|---|
| RawMesh | Mesh (or Point Cloud) | 1..1 | A scan of the scene |
| RawTexture | Texture / atlas | 0..1 | Atlas of texture |
| Timestamp | time information | 0..1 | timestamp (associated to 3D Model generation). Time information can be a string (date:time AAAA:MM:JJ:HH:MN:SS:MS) or a number |
| Complete | Bool | 0..1 | The scan is complete or partial |

The refresh occurrence can be received during configuration process or set by UE (if the UE can extract 3D Model). 3D Model are transmitted when an update occurs. This occurrence value is considered in all scenarios including when the data will not be transmitted. Configurations parameters are negotiated between the UE and server. This includes defining common XR spaces and defining data that are transmitted to the server. The format is extensible to support the exchange of additional/future configuration information. The configuration is performed during XRSpatial downlink and uplink delivery session. Segmented 3D model can be transmitted from UE to Server or from Server to UE.

| **Name** | **Type** | **Cardinality** | **Description** |
|---|---|---|---|
| RefreshOccurrence | enum | 1..1 | |
| xrSpace | ID | 1..1 | ID of the XRSpace used to express the 3D coordinates of the 3DModel |
| Segmented3DModels | Array | 1..1 | Array of segmented object. |
| Segmented3DModel | Object | 0..1 | |

Segmented3DModel is defined according to the following syntax:

| **Name** | **Type** | **Cardinality** | **Description** |
|---|---|---|---|
| Type | String | 1..1 | example {"table", "room", "chair", "character", ...} |
| referenceId | Number | 1..1 | The unique ID of the 3D object |
| mesh | Mesh | | The mesh of the segmented object |
| texture | Image | 0..1 | The texture associated to the segmented object |
| | | | |
| size | Vec2 | 1..1 | Size of the texture |
| timestamp | time information | 0..1 | timestamp (associated to segmentation process). Time information can be a string (date:time AAAA:MM:JJ:HH:MN:SS:MS) or a number |

The refresh occurrence can be received during configuration process or set by UE (if the UE can extract 3D Model). 3D Models are transmitted when an update occurs. This occurrence value is considered in all scenarios including when the data are transmitted. In one embodiment, a 3D object graph is transmitted instead of an array of 3D objects. In this case, 3D objects are nodes. In another embodiment, only one texture (atlas) is transmitted.

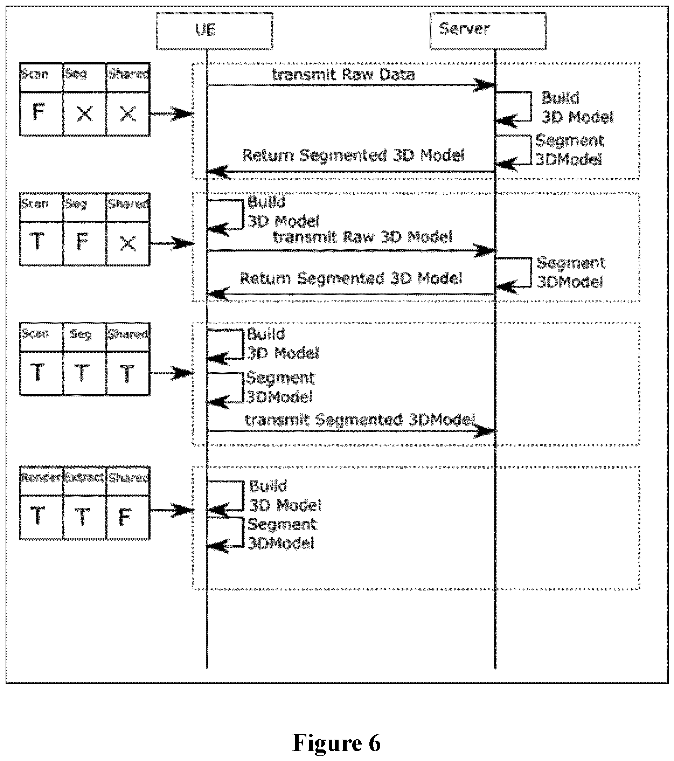

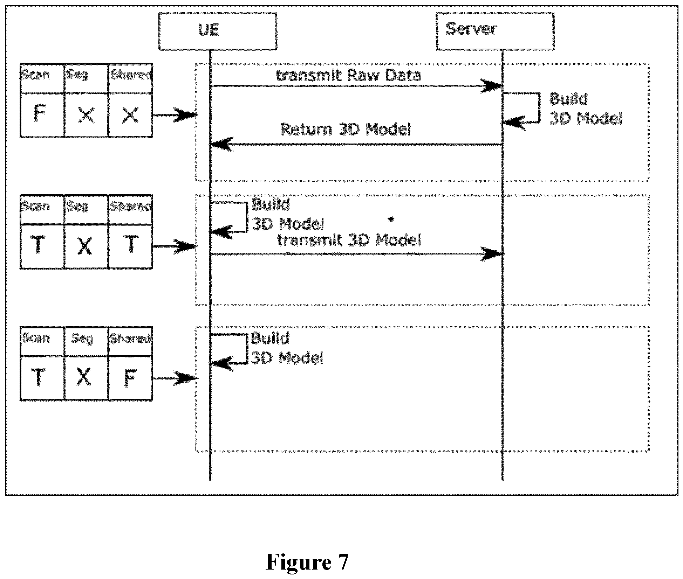

**Figures 6** **and** **7** illustrates two embodiments of runtime step 43 of Figure 4, according to the present principles. Depending on the configuration at step 4, the call flow of Figure 6 or the call flow of Figure 7 is used at runtime between UE and server.

Parameters are Scan: if true, scan of the scene is done by UE, if false scan is done by Server; Seg: if true, segmentation of 3D Model is done by UE, if false segmentation is done by Server; Shared: if true, 3D Model is transmitted from UE to Server, if false, data are not transmitted. Consistency between data transmitted and scan volumes defined during initialization is ensured by the server. In one embodiment, the application guides the user by displaying scan volumes at runtime. The cross "X" means" don't care", T stands for True and F is for False. In the call flow of Figure 6, scan and segmentation are required. Capabilities of the UE correspond to Scan and Seg item. In the call flow of Figure 7, only scan is required. Capabilities of the UE correspond to Scan item. Seg item is ignored.

Depending on the configuration process, the client on the XR device (UE) or the server periodically transmits a set of raw data. When raw data are transmitted, during runtime, the value of the parameter is transmitted. The message may be, for example, formatted in JSON format. The payload of the message is set according to the example following syntax:

| **Name** | **Type** | **Cardinality** | **Description** |
|---|---|---|---|
| xrSpace | ID | 1..1 | ID of the XRSpace used to express the 3D coordinates of the pose |
| RawDatas | Array | 1..1 | Array of RawData |
| RawData | Object | | |

Depth Data can also be transmitted.

When the 3D model is transmitted, the client on the XR device periodically transmits a raw 3D Model to the server to segment it. During runtime, the value of the parameter is transmitted. The message may be, for example, formatted in JSON format. The payload of the message is set according to the example following syntax:

| **Name** | **Type** | **Cardinality** | **Description** |
|---|---|---|---|
| xrSpace | ID | 1..1 | ID of the XRSpace used to express the 3D coordinates of 3D Model |
| 3DModel | Object | 1..1 | |

When segmented 3D Model are transmitted, the client on the XR device periodically transmits a segmented objects to the server. The payload of the message is set according to the example following syntax:

| **Name** | **Type** | **Cardinality** | **Description** |
|---|---|---|---|
| xrSpace | ID | 1..1 | ID of the XRSpace used to express the 3D coordinates of 3D Model objects |
| Segmented3DModels | Array | 1..1 | Array of segmented object. |
| Segmented3DModel | Object | 0..1 | |

**Figure 3** shows an example architecture of a device 30 which may be configured to implement methods according to embodiments of the present principles. The device is linked with other devices via their bus 31 and/or via I/O interface 36.

Device 30 comprises following elements that are linked together by a data and address bus 31:D
- a processor 32 (or CPU), which is, for example, a DSP (or Digital Signal Processor);
- a ROM (or Read Only Memory) 33;
- a RAM (or Random Access Memory) 34;
- a storage interface 35;
- an I/O interface 36 for reception of data to transmit, from an application; and
- a power supply (not represented in Figure 2), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 30 is linked, for example via bus 31 to a set of sensors 37 and to a set of rendering devices 38. Sensors 37 may be, for example, cameras, microphones, temperature sensors, Inertial Measurement Units, GPS, hygrometry sensors, IR or UV light sensors or wind sensors. Rendering devices 38 may be, for example, displays, speakers, vibrators, heat, fan, etc.

In accordance with examples, the device 30 is configured to implement a method according to the present principles and belongs to a set comprising:
- a mobile device;
- a communication device;
- a game device;
- a tablet (or tablet computer);
- a laptop;
- a still picture camera;
- a video camera.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for managing data of an extended or augmented scene, the method comprising:
- initializing a user equipment configured to acquire data relative to a real environment of the extended or augmented scene;
- determining a configuration for the user equipment on how to transmit data to a server;
- obtaining the data by capturing the real environment with the user equipment; and
- transmitting the data to the server according to the configuration.

2. The method of claim 1, wherein determining the configuration comprises determining whether a building of a 3D model of the real environment is delegated to the server, the building being based on data.

3. The method of claim 2, wherein the server transmits the 3D model to the user equipment and wherein the user equipment segments the 3D model.

4. The method of claim 1, wherein the user equipment builds a 3D model of the real environment based on data, transmits the 3D model to the server and wherein the configuration comprises determining whether a segmentation of the 3D model is delegated to the server.

5. The method of one of claims 1 to 4, wherein initializing the user equipment comprises sending capturing requirements and capabilities of the user equipment to the server.

6. The method of one of claims 1 to 4, wherein initializing the user equipment comprises receiving capturing requirements for the real environment and wherein the user equipment sends its capabilities according to the capturing requirements.

7. A device comprising a processor configured for:
- initializing a user equipment configured to acquire data relative to a real environment of an extended or augmented scene;
- determining a configuration for the user equipment to transmit data to a server;
- obtaining data by capturing the real environment with the user equipment; and
- transmitting the data to the server according to the configuration.

8. The device of claim 7, wherein determining the configuration comprises determining whether a building of a 3D model of the real environment is delegated to the server, the building being based on data.

9. The device of claim 8, wherein the server transmits the 3D model to the user equipment and wherein the user equipment segments the 3D model.

10. The device of claim 7, wherein the user equipment builds a 3D model of the real environment based on data, transmits the 3D model to the server and wherein the configuration comprises determining whether a segmentation of the 3D model is delegated to the server.

11. The device of one of claims 7 to 10, wherein initializing the user equipment comprises sending capturing requirements and capabilities of the user equipment to the server.

12. The device of one of claims 7 to 10, wherein initializing the user equipment comprises receiving capturing requirements for the real environment and wherein the user equipment sends its capabilities according to the capturing requirements.
